(19) Europäisches Patentamt
European Patent Office
Office européen des brevets

(11) **EP 3 972 102 A1**

(12) **EUROPEAN PATENT APPLICATION**

(43) Date of publication:
**23.03.2022 Bulletin 2022/12**

(21) Application number: **20275144.2**

(22) Date of filing: **22.09.2020**

(51) International Patent Classification (IPC):
*H02M 1/32* (2007.01)        *H01H 33/04* (2006.01)
*H01H 33/59* (2006.01)       *H02M 7/483* (2007.01)

(52) Cooperative Patent Classification (CPC):
**H02M 1/32; H01H 33/04; H01H 33/596;**
**H02M 7/4835**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **General Electric Technology GmbH
5400 Baden (CH)**

(72) Inventors:
• **Kumar, Amit**
**Stafford, ST16 1WS (GB)**
• **O'heidhin, Gearoid**
**Stafford, ST16 1WS (GB)**
• **Filipe Willcox De, Luiz**
**Stafford, ST16 1WS (GB)**

(74) Representative: **Potter Clarkson
The Belgrave Centre
Talbot Street
Nottingham NG1 5GG (GB)**

(54) **IMPROVEMENTS IN OR RELATING TO POWER TRANSMISSION SCHEMES**

(57)  In the field of high voltage direct current (HVDC) power transmission networks, there is a need for an improved power transmission scheme.

A power transmission scheme (10) comprises a first DC transmission terminal (12), for connection in-use to a first DC transmission conduit of a DC network, and a second DC transmission terminal (14), for connection in-use to a second DC transmission conduit of the DC network. The first DC transmission terminal (12) is electrically connected with a first DC converter terminal (16) of a power converter (18), via a first electrical interconnection (20), and the second DC transmission terminal (14) is electrically connected with a second DC converter terminal (22) of the power converter (18), via a second electrical interconnection (24). The power converter (18) includes at least one converter limb (26A, 26B, 26C) which extends between the first and second DC converter terminals (16, 22), and the or each converter limb (26A, 26B, 26C) includes first and second limb portions (28A, 28B, 28C, 30A, 30B, 30C) that are separated by a respective AC terminal (32A, 32B, 32C), for connection in-use to a phase (A, B, C) of an AC network. Each limb portion (28A, 28B, 28C, 30A, 30B, 30C) includes a switching valve (34) to facilitate the transfer of power between the DC and AC networks. The or each first limb portion (28A, 28B, 28C), together with the first electrical interconnection (20), defines a respective first DC current flow path portion (42A, 42B, 42C) between the first DC transmission terminal (12) and the respective AC terminal (32A, 32B, 32C). Similarly, the or each second limb portion (30A, 30B, 30C), together with the second electrical interconnection (24), defies a respective second

DC current flow path portion (43A, 43B, 43C) between the second DC transmission terminal (14) and the respective AC terminal (32A, 32B, 32C). At least one of the or each first DC current flow path portion (42A, 42B, 42C) includes a series-connected main inductive element (44, 46) and the or each second DC current flow path portion (43A, 43B, 43C) includes a series-connected main inductive element (48, 50). At least one of the first and second electrical interconnections (20, 24) includes a DC circuit breaker arrangement (64; 64') which itself includes at least one auxiliary inductive element (66) that is electrically connected with at least one breaker module (70; 70', 70"). The or each breaker module (70; 70', 70") comprises a breaker switch (72) that is series-connected within the corresponding electrical interconnection (20, 24) and a breaker module capacitor (74) which is connected in series with the auxiliary inductive element (66) to define an auxiliary resonant circuit (76) that is arranged in parallel with the breaker switch (72). The or each auxiliary inductive (66) element is mutually coupled with a main inductive element (44, 46, 48, 50), whereby in the event of a fault (84) resulting in a rising fault current ($i_1$) flowing through one or more faulted DC current flow path portions (42A, 42B, 42C, 43A, 43B, 43C) and the main inductive element (44, 46, 48, 50) therewithin the rising fault current ($i_1$) induces a rising voltage ($v_2$) across the corresponding mutually coupled auxiliary inductive element (66) which creates a growing counter current ($i_2$) in the or each corresponding auxiliary resonant circuit (76). The or each growing counter current ($i_2$) is opposed to the fault current ($i_1$) flowing through the or each breaker switch (72) in the or each faulted DC current flow path portion (42A, 42B, 42C, 43A, 43B, 43C) and thereby permits zero crossing opening of the or each said breaker switch (72) when the counter current ($i_2$) equals the fault current ($i_1$).

Figure 1

**Description**

This invention relates to a power transmission scheme, preferably for use in a high voltage direct current (HVDC) power transmission network.

In HVDC power transmission networks AC power is typically converted to DC power for transmission via overhead lines, under-sea cables and/or underground cables. This conversion removes the need to compensate for the AC capacitive load effects imposed by the power transmission conduit, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks.

The conversion between DC power and AC power is utilised where it is necessary to interconnect DC and AC networks. In any such power transmission network, converters (i.e. power converters) are required at each interface between AC and DC power to affect the required conversion from AC to DC or from DC to AC.

According to a first aspect of the invention there is provided a power transmission scheme comprising a first DC transmission terminal for connection in-use to a first DC transmission conduit of a DC network and a second DC transmission terminal for connection in-use to a second DC transmission conduit of the DC network, the first DC transmission terminal being electrically connected with a first DC converter terminal of a power converter via a first electrical interconnection and the second DC transmission terminal being electrically connected with a second DC converter terminal of the power converter via a second electrical interconnection, the power converter including at least one converter limb extending between the first and second DC converter terminals, the or each converter limb including first and second limb portions separated by a respective AC terminal for connection in-use to a phase of an AC network, each limb portion including a switching valve to facilitate the transfer of power between the DC and AC networks, the or each first limb portion together with the first electrical interconnection defining a respective first DC current flow path portion between the first DC transmission terminal and the respective AC terminal, the or each second limb portion together with the second electrical interconnection defining a respective second DC current flow path portion between the second DC transmission terminal and the respective AC terminal, and at least one of the or each first DC current flow path portion including a series-connected main inductive element and the or each second DC current flow path portion including a series-connected main inductive element,

> at least one of the first and second electrical interconnections including a DC circuit breaker arrangement, the or each circuit breaker arrangement including at least one auxiliary inductive element electrically connected with at least one breaker module comprising a breaker switch series-connected within the corresponding electrical interconnection and a breaker module capacitor connected in series with the auxiliary inductive element to define an auxiliary resonant circuit arranged in parallel with the breaker switch,

> the or each auxiliary inductive element being mutually coupled with a main inductive element, whereby in the event of a fault resulting in a rising fault current flowing through one or more faulted DC current flow path portions and the main inductive element therewithin the rising fault current induces a rising voltage across the corresponding mutually coupled auxiliary inductive element which creates a growing counter current in the or each corresponding auxiliary resonant circuit, and

> the or each growing counter current being opposed to the fault current flowing through the or each breaker switch in the or each faulted DC current flow path portion and thereby permitting zero crossing opening of the or each said breaker switch when the counter current equals the fault current.

The ability to open the or each breaker switch at a zero crossing point of the fault current, i.e. when no current is flowing through the or each breaker switch is highly desirable because it allows the use of a relatively compact and inexpensive mechanical circuit breaker as the breaker switch, without an arc being drawn between the metallic contacts of such a circuit breaker which could not be easily quenched.

Meanwhile, utilising a mutually coupled auxiliary inductive element as the source of energy to create the required counter current is advantageous because it makes use of an existing main inductive element, at least one of which will almost always be included within a DC current flow path portion between the first and second DC transmission terminals and corresponding AC terminal of a HVDC power transmission scheme. The circuit breaker arrangement of the invention is therefore easy to implement.

In addition, under steady-state, i.e. normal, operating conditions a constant DC current flowing through a given DC current flow path portion, and hence through one or more of the aforementioned main inductive elements generates no potential difference across the or each said main inductive element, and so no voltage is induced in the corresponding mutually coupled auxiliary inductive element. Consequently, any steady-state operating losses associated with the auxiliary inductive element and the or each associated breaker module are minimised.

Furthermore, such a combination of mutually coupled main and auxiliary inductive elements avoids the need for a separate energy source, such as a battery or precharged capacitor which it is necessary to ensure remains charged, and thus is more reliable.

In addition, the or each auxiliary inductive element and the or each associated breaker module incorporate only passive components, and so help to ensure more reliable operation than, e.g. a circuit breaker arrangement requiring the operation of secondary switches to electrically connect a resonant circuit and thereby generate a counter current. Moreover, such passive components do not require specialised and expensive cooling, such as is the case with, e.g. power electronic circuit breaker arrangements.

The relatively simple circuit breaker arrangement of the invention is also less expensive and has a smaller overall footprint than both a comparable circuit breaker arrangement utilising secondary switches, and especially a comparable power electronic circuit breaker arrangement.

Preferably the at least one series-connected main inductive element is or includes one of a converter reactor located on an AC side or a DC side of the switching valve within the first or second limb portion, and a DC reactor located within the first or second electrical interconnection.

Such converter and DC reactors are routinely included within, e.g. HVDC power transmission schemes, to limit a discharge or fault current within either a power converter itself or the DC transmission conduits that are connected therewith by respective electrical interconnections, and so are readily available for mutual coupling with a corresponding auxiliary inductive element to generate an associated counter current, without the need for further components to be added to the power transmission scheme.

Optionally at least one DC current flow path portion includes a plurality of series-connected main inductive elements, a plurality of which main inductive elements has an auxiliary inductive element mutually coupled therewith, each of which auxiliary inductive element is electrically connected with at least one breaker module, the plurality of breaker modules being connected in series to form a part of one circuit breaker arrangement.

The inclusion of a plurality of series-connected breaker modules within one circuit breaker arrangement desirably assists in allowing the circuit breaker arrangement to handle a given fault current, with individual components within each breaker module that have a relatively low performance, e.g. voltage, rating, and thereby permits relatively inexpensive individual components to be used.

At least one auxiliary inductive element may be electrically connected with a plurality of breaker modules, the plurality of said breaker modules being connected in series to form a part of one circuit breaker arrangement.

Such an arrangement provides the aforementioned benefit of being able to handle a commensurately higher fault current without a commensurate increase in individual component cost, while sharing a single auxiliary inductive element amongst multiple breaker modules and thus further limiting costs and complexity.

In a preferred embodiment of the invention the at least one auxiliary inductive element is or includes an auxiliary coil.

In another preferred embodiment of the invention the or each auxiliary coil is magnetically coupled with the corresponding main inductive element.

An auxiliary coil is simple and cost-effective to implement, while magnetically coupling such a coil with the corresponding main inductive element permits the reliable and consistent induction of a rising voltage across the coil in the event of a rising fault current flowing through the corresponding main inductive element that is mutually coupled therewith.

Optionally the or each auxiliary coil is located above the corresponding main inductive element.

The or each auxiliary coil may be centralised relative to the corresponding main inductive element.

The foregoing features help to ensure that there is a high degree of mutual coupling between the or each auxiliary coil and the corresponding main inductive element, in order that effective induction of a rising voltage across the or each said auxiliary coil is achieved, while necessarily accommodating any layout constraints within the power transmission scheme.

Preferably at least one breaker module further includes a surge arrestor connected in parallel with the breaker switch.

The inclusion of such a surge arrestor governs the voltage generated across the breaker switch when it is opened at the zero crossing, and thereafter absorbs the remaining fault current flowing through the or each faulted DC current flow path portion which thereby gradually reduces to zero.

In another preferred embodiment of the invention at least one breaker module further includes a discharge transformer connected in parallel with the breaker module capacitor.

Including a discharge transformer in the foregoing configuration provides an option for quickly discharging the breaker module capacitor after zero crossing opening of the associated breaker switch, and so contributes to reducing the required steady-state voltage rating of the breaker module capacitor.

Optionally at least one circuit breaker arrangement additionally includes a residual breaker switch connected in series within the corresponding first or second electrical interconnection.

The inclusion of such a residual breaker switch advantageously permits the clearing of a current oscillation that may arise, e.g. after zero crossing opening of the or each breaker switch, because of inductance within the power transmission scheme and capacitance of the or each breaker switch. It also usefully permits electrical separation of the DC circuit breaker arrangement from an associated DC network, after the fault is cleared.

It will be appreciated that the use of the terms "first" and "second", and the like, in this patent specification is merely intended to help distinguish between similar features (e.g. first and second limb portions, etc.), and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

There now follows a brief description of preferred embodiments of the invention, by way of a non-limiting example, with reference to the accompanying drawings in which:

Figure 1 shows a schematic view of a power transmission scheme according to a first embodiment of the invention;
Figure 2 shows an enlarged schematic view of a DC circuit breaker arrangement which forms a part of the power transmission scheme shown in Figure 1;
Figure 3 shows an enlarged schematic view of a DC circuit breaker arrangement which forms a part of a power transmission scheme according to another embodiment of the invention; and
Figure 4 shows a schematic view of mutually coupled auxiliary and main inductive elements which form a part of the DC circuit breaker arrangement shown in Figure 2.

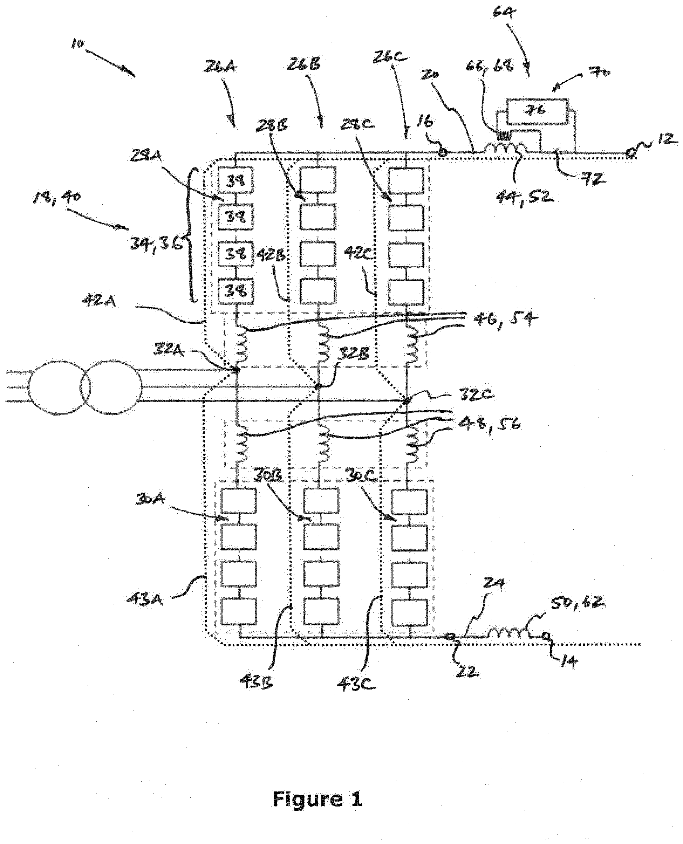

A power transmission scheme according to a first embodiment of the invention is designated generally by reference numeral 10, as shown in Figure 1.

The power transmission scheme 10 includes a first DC transmission terminal 12 which, in-use, is connected to a first DC transmission conduit (not shown), e.g. in the form of a subsea cable, underground cable, an overhead line, or a mixture of such cables and line, of a DC network. The power transmission scheme 10 also includes a second DC transmission terminal 14 which, in-use, is connected to a second DC transmission conduit (also not shown) of the said DC network.

The first DC transmission terminal 12 is electrically connected with a first DC converter terminal 16 of a power converter 18 via a first electrical interconnection 20, and the second DC transmission terminal 14 is electrically connected with a second DC converter terminal 22 of the power converter 18 via a second electrical interconnection 24.

The power converter 18 includes three converter limbs 26A, 26B, 26C which extend between the first and second DC converter terminals 16, 22, and each converter limb 26A, 26B, 26C includes first and second limb portions 28A, 28B, 28C, 30A, 30B, 30C that are separated by a respective AC terminal 32A, 32B, 32C that, in-use, is connected to a respective phase A, B, C of an AC network (not shown). In other embodiments of the invention (not shown) the power converter may include fewer than or more than three converter limbs depending on the number of phases in an associated AC network.

Returning to the embodiment shown, each limb portion 28A, 28B, 28C, 30A, 30B, 30C includes a switching valve 34 which facilitates the transfer of power between the DC and AC networks.

More particularly, in the embodiment shown each switching valve 34 is a chain-link converter 36 which includes a plurality of series connected chain-link modules 38.

Each of the chain-link modules 38 has a plurality of switching elements that are connected in parallel with an energy storage device, whereby each corresponding chain-link converter 26, 28 is controllable to provide a stepped variable voltage source.

Each chain-link module 38 has the same topology, and more particularly still each chain-link module 38 includes a first pair of switching elements that are connected in parallel with the energy storage device in a known half-bridge arrangement to define a 2-quadrant unipolar module. Switching of the switching elements selectively directs current through the energy storage device or causes current to bypass the energy storage device, such that each chain-link module 38 can provide zero or positive voltage and can conduct current in two directions.

The energy storage device takes the form of a capacitor, although other types of energy storage device, i.e. any device that is capable of storing and releasing energy to selectively provide a voltage, e.g. a fuel cell or battery, may also be used.

In addition, each switching element includes a semiconductor device, typically in the form of an Insulated Gate Bipolar Transistor (IGBT).

It is, however, possible to use other types of self-commutated semiconductor devices, such as a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated switching device. In addition, one or more of the semiconductor devices may instead include a wide-bandgap material such as, but not limited to, silicon carbide, boron nitride, gallium nitride and aluminium nitride.

The number of semiconductor devices in each switching element may vary depending on the required voltage and current ratings of that switching element.

Each of the switching elements also includes a passive current check element that is connected in anti-parallel with a corresponding semiconductor device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

Other embodiments of the invention may include a different exemplary chain-link module which includes first and second pairs of switching elements and a capacitor that are connected in a known full bridge arrangement to define a 4-quadrant bipolar module. In a similar manner to the chain-link module 38 mentioned above, switching of the switching elements again selectively directs current through the capacitor or causes current to bypass the capacitor such that the other exemplary chain-link module can provide zero, positive or negative voltage and can conduct current in two directions.

In still further embodiments of the invention, one or more of the chain-link converters 36 may include solely the other exemplary chain-link modules, or a combination of chain-link modules 38 and the other exemplary chain-link modules.

Accordingly, the power converter 18 in the embodiment shown takes the form of a voltage source converter 40, although other types of power converter may be utilised instead in other embodiments of the invention.

Each first limb portion 28A, 28B 28C together with the first electrical interconnection 20 defines a respective first DC current flow path portion 42A, 42B, 42C between the first DC transmission terminal 12 and the corresponding AC terminal 32A, 32B, 32C. Similarly, each second limb portion 30A, 30B, 30C together with the second electrical interconnection 24 defines a respective second DC current flow path portion 43A, 43B, 43C between the second DC transmission terminal 14 and the corresponding AC terminal 32A 32B, 32C.

Moreover, each first DC current flow path portion 42A, 42B, 42C includes first and second series-connected main inductive elements 44, 46, while each second current flow path portion 43A, 43B, 43C includes third and fourth series-connected main inductive elements 48, 50.

The first main inductive element 44 is a first DC reactor 52 which takes the form of a coil and is located in the first electrical interconnection 20 to, in-use, add an inductance in series with the first DC transmission conduit to help smooth the direct current flowing therethrough. The location of the first DC reactor 52 in the first electrical interconnection 20 means that it is common to each of the three first DC current flow path portions 42A, 42B, 42C.

The second and third main inductive elements 46, 48 are respective first and second converter reactors 54, 56, each of which takes the form of a coil and is located on an AC side 58 of the switching valve 34, i.e. the chain-link converter 36, in each first and second limb portion 28A, 28B, 28C, 30A, 30B, 30C. In other embodiments of the invention, one or both of the first and second converter reactors may be located on an opposite, DC side 60 of the corresponding switching valve. In any event, in the foregoing manner the first converter reactors 54 in a given converter limb 26A, 26B, 26C lie within a different first DC current flow path portion 42A, 42B, 42C, and the second converter reactors 56 in a given converter limb 26A, 26B, 26C lie within a different second DC current flow path portion 43A 43B, 43C.

The fourth main inductive element 50, meanwhile, is a second DC reactor 62 that similarly takes the form of a coil and is located in the second electrical interconnection 24 to similarly, in-use, add an inductance in series with the second DC transmission conduit to help smooth the direct current flowing therethrough. The second DC reactor 62 is also similarly common to each of the three second DC current flow path portions 43A, 43B, 43C.

Other embodiments of the invention may include fewer than or more than four main inductive elements within one or more DC current flow path portions, which may or may not be or include reactor coils, although each such other embodiment of the invention preferably includes at least one main inductive element in the or each first DC current flow path portion, or at least one main inductive element in the or each second DC current flow path portion.

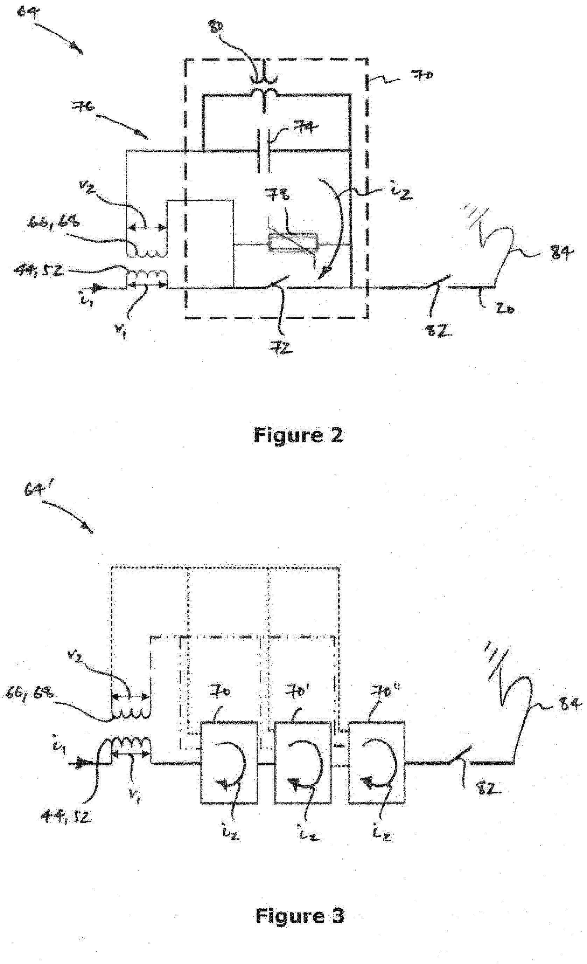

Returning to the embodiment shown, the first electrical interconnection 20 also includes a DC circuit breaker arrangement 64, which is shown in more detail in Figure 2. In other embodiments of the invention, one or both of the first and second electrical interconnections may include a similar such DC circuit breaker arrangement.

The circuit breaker arrangement 64 shown includes an auxiliary inductive element 66, which in the embodiment shown takes the form of an auxiliary coil 68 (although this need not necessarily be the case), that is electrically connected with a breaker module 70.

The breaker module 70 includes a breaker switch 72 that is series-connected within the first electrical interconnection 20, as well as a breaker module capacitor 74 which is connected in series with the auxiliary inductive element 66, i.e. the auxiliary coil 68, to define an auxiliary resonant circuit 76 that is arranged in parallel with the breaker switch 72.

The breaker switch 72 may be a normal AC circuit breaker, such as a sulphur hexafluoride or vacuum mechanical switch.

In addition, the breaker module includes a surge arrestor 78 which is also connected in parallel with the breaker switch 72, and a discharge transformer 80, i.e. a discharge voltage transformer, that is connected in parallel with the breaker module capacitor 74. In other embodiments of the invention (not shown) the discharge transformer may be replaced by some other form of discharge circuit.

Additionally, the circuit breaker arrangement 64 includes a residual breaker switch 82 that is connected in series within the first electronical interconnection 20.

Other embodiments of the invention may include a different circuit breaker arrangement 64' in which a single auxiliary inductive element 66, e.g. a single auxiliary coil 68, is electrically connected with a plurality of essentially identical breaker modules that are connected in series with one another, e.g. three essentially identical series-connected breaker modules 70, 70' and 70", as shown in Figure 3.

In the embodiment shown, the auxiliary inductive element 66, i.e. the auxiliary coil 68 is mutually coupled with the first main inductive element 44, i.e. the first DC reactor coil 52.

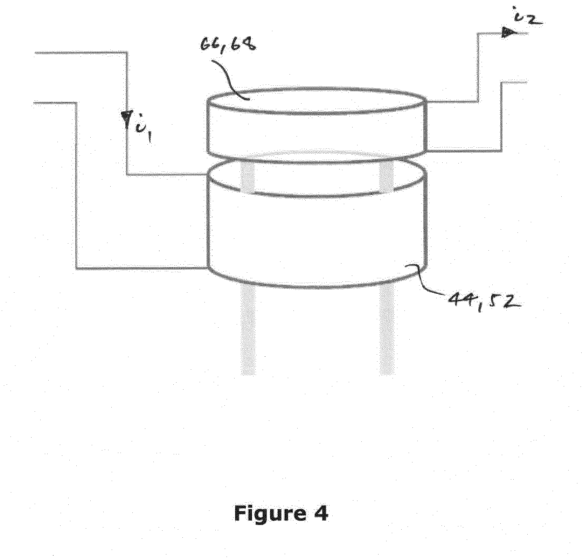

More particularly, the auxiliary coil 68 is magnetically coupled with the first DC reactor coil 52, and more particularly still is located above and centralised relative to the first DC reactor coil 52, i.e. positioned such that respective coils share a common central axis, as shown in Figure 4.

The mutual inductance between two coils is a function of the inductance of each coil, as well as the relative arrangement, i.e. topology, of the two coils, and is given generally by

$$M := \sqrt{L1 \cdot L2} \cdot k$$

where,

M is the mutual inductance between the two coils;
$L_1$ is the inductance of the first coil;
$L_2$ is the inductance of the second coil; and
k is a geometric factor which varies between 0 and 1.

In the geometric arrangement shown in Figure 4, i.e. in which the auxiliary coil 68 is located above and centralised relative to the first DC reactor coil 52, the mutual inductance between the auxiliary coil 68 and the DC reactor coil 52 is given by

$$M := \frac{4 \cdot \pi \cdot n1 \cdot n2 \cdot (a1 \cdot a2)^2}{10^6} \cdot \left[ \sum_{i=0}^{3} \left[ \int_0^\pi \frac{(-1)^i \cdot \sin(\varphi)^2 \cdot \sqrt{a1^2 + a2^2 - 2 \cdot a1 \cdot a2 \cdot \cos(\varphi) + \left(c_{i,0}\right)^2}}{\left(a1^2 + a2^2 - 2 \cdot a1 \cdot a2 \cdot \cos(\varphi)\right)} d\varphi \right] \right]$$

where,

$$c := \begin{pmatrix} d + l1 + l2 \\ d + l1 - l2 \\ d - l1 - l2 \\ d - l1 + l2 \end{pmatrix}$$

and,

l1 is half the height of the auxiliary coil 68;
l2 is half the height of the first DC reactor coil 52;
a1 is the radius of the auxiliary coil 68;
a2 is the radius of the first DC reactor coil 52;
d is the vertical distance between the centre of each coil 68, 52;
n1 is the number of turns per unit of length (i.e. height) of the auxiliary coil 68; and

n2 is the number of turns per unit of length (i.e. height) of the first DC reactor coil 52.

Other coupling and topology arrangements are possible, however, and may instead be utilised in other embodiments of the invention (not shown).

Still further other embodiments of the invention (also not shown) may include a plurality of main inductive elements, e.g. a DC reactor and a converter reactor, that each has a separate auxiliary inductive element, e.g. auxiliary coil, mutually coupled therewith. Moreover, each such auxiliary inductive element may itself be electrically connected with one or more breaker modules, that may or may not form a part of the same DC circuit breaker arrangement.

Returning to the embodiment shown, in use, the occurrence of a fault 84, e.g. in the first electrical interconnection 20 (and hence common to each first DC current flow path portion 42A, 42B, 42C, as well as each second DC current flow path portion 43A 43B, 43C), leads to a rising fault current $i_1$ which flows through the faulted DC current flow path (which in the embodiment shown, given the location of the example fault 84, will be through all of the first and second DC current flow path portions 42A, 42B, 42C, 43A, 43B, 43C).

A fault might also arise in an associated AC network (not shown), such that a rising fault current again flows through a faulted DC current flow path portion. In such an instance, the or each particular DC current flow path portion through which the rising fault current flows will be determined by the switching configuration of the switching valves within the power converter, along with which AC terminal is electrically connected to the fault.

The first DC reactor coil 52 is similarly common to each of the now faulted DC current flow path portions 42A, 42B, 42C, 43A 43B, 43C and so the rising fault current $i_1$ flows through the first DC reactor coil 52. Such a rising fault current $i_1$ induces a rising voltage $v_2$ across the auxiliary inductive element 66, i.e. across the auxiliary coil 68, that is mutually coupled with the first DC reactor coil 52, and in turn creates a growing counter current $i_2$ in the auxiliary resonant circuit 76 defined by the auxiliary coil 68 and breaker module capacitor 74 within the breaker module 70.

The mutual inductance M between the auxiliary coil 68 and the first DC reactor coil 52 is known, as set out above, and so it is possible to determine the counter current $i_2$ from

$$v1 = L1 * \frac{di1}{dt} + M * \frac{di2}{dt}$$

$$v2 = L2 * \frac{di2}{dt} + M * \frac{di1}{dt}$$

$$i2 = C * \frac{dv2}{dt}$$

where,

$v_1$ is the voltage across the first DC reactor coil 52;
$L_1$ is the inductance of the first DC reactor coil 52;
$L_2$ is the inductance of the auxiliary coil 68; and
C is the capacitance of the breaker module capacitor 74

which gives,

$$v2 = L2 * C * \frac{d^2 v2}{dt^2} + M * \frac{di1}{dt}$$

and from that

$$\frac{v2(s)}{s^2} = L2 * C * v2(s) + \frac{M}{s} * i1(s)$$

The growing counter current $i_2$ is opposed to the fault current $i_1$ flowing through the breaker switch 72 in the faulted DC current flow path portions 42A, 42B, 42C, 43A, 43B, 43C and so zero crossing opening of the said breaker switch 72 becomes possible when the counter current $i_2$ equals the fault current $i_1$.

Following zero crossing opening of the breaker switch 72, the breaker module capacitor 74 charges to the voltage potential at the first DC converter terminal 16, while the surge arrestor 78 governs the voltage generated across the breaker switch 72 and absorbs the remaining fault current $i_1$ flowing through the faulted DC current flow paths 42A, 42B, 42C which therefore gradually reduces to zero.

Once the fault current $i_1$ has reduced to zero, after the aforesaid zero crossing opening of the breaker switch 72, the residual breaker switch 82 is opened against minimal residual current, to provide electrical separation from the first DC transmission terminal 12 and the associated DC transmission conduit.

Thereafter, the breaker module capacitor 74 is discharged via the discharge transformer 80. As an alternative to discharging the breaker module capacitor 74 via the discharge transformer 80, the breaker switch 72 may instead be reclosed and the breaker module capacitor 74 discharged via the auxiliary resonant circuit 76.

In addition to the foregoing, the DC circuit breaker arrangement 64 may also be used during normal operating conditions, i.e. in the absence of a fault which causes a rising fault current ii.

More particularly, the breaker switch 72 can be partially opened when a normal DC current is flowing through the first electrical interconnection 20. Such partial opening of the breaker switch 72 causes a flash current $i_1$ to arc across mechanical switch contacts of the breaker switch 72, which gives rise to counter current $i_2$ in the auxiliary resonant circuit 76 that is a function of the voltage across the arc.

The counter current $i_2$ opposes the flash current $i_1$ flowing through the breaker switch 72, and continued and full opening of the breaker switch 72 again becomes possible at a zero crossing when the counter current $i_2$ equals the flash current $i_1$.

Following zero crossing opening of the breaker switch 72, under the aforementioned normal operating conditions, the breaker module capacitor 74 again charges to the voltage potential at the first DC converter terminal 16, while the surge arrestor 78 again governs the voltage generated across the breaker switch 72 and absorbs the remaining flash current $i_1$ which is therefore extinguished to zero.

Once the flash current $i_1$ has been extinguished, after the aforesaid zero crossing opening of the breaker switch 72, the residual breaker switch 82 is opened against minimal residual current, to provide electrical separation from the first DC transmission terminal 12 and the associated DC transmission conduit.

Thereafter, the breaker module capacitor 74 is again discharged via the discharge transformer 80, or alternatively via the auxiliary resonant circuit 76 by instead reclosing the breaker switch 72.

**Claims**

1. A power transmission scheme (10) comprising a first DC transmission terminal (12) for connection in-use to a first DC transmission conduit of a DC network and a second DC transmission terminal (14) for connection in-use to a second DC transmission conduit of the DC network, the first DC transmission terminal (12) being electrically connected with a first DC converter terminal (16) of a power converter (18) via a first electrical interconnection (20) and the second DC transmission terminal (14) being electrically connected with a second DC converter terminal (22) of the power converter (18) via a second electrical interconnection (24), the power converter (18) including at least one converter limb (26A, 26B, 26C) extending between the first and second DC converter terminals (16, 22), the or each converter limb (26A, 26B, 26C) including first and second limb portions (28A, 28B, 28C, 30A, 30B, 30C), separated by a respective AC terminal (32A, 32B, 32C) for connection in-use to a phase (A, B, C) of an AC network, each limb portion (28A, 28B, 28C, 30A, 30B, 30C) including a switching valve (34) to facilitate the transfer of power between the DC and AC networks, the or each first limb portion (28A, 28B, 28C) together with the first electrical interconnection (20) defining a respective first DC current flow path portion (42A, 42B, 42C) between the first DC transmission terminal (12) and the respective AC terminal (32A, 32B, 32C), the or each second limb portion 30A, 30B, 30C together with the second electrical interconnection (24) defining a respective second DC current flow path portion (43A, 43B, 43C) between the second DC transmission terminal (14) and the respective AC terminal (32A, 32B, 32C), and at least one of the or each first DC current flow path portion (42A, 42B, 42C) including a series-connected main inductive element (44, 46) and the or each second DC current flow path portion (43A, 43B, 43C) including a series-connected main inductive element (48, 50),

   at least one of the first and second electrical interconnections (20, 24) including a DC circuit breaker arrangement (64; 64'), the or each circuit breaker arrangement (64; 64') including at least one auxiliary inductive element (66) electrically connected with at least one breaker module (70; 70', 70") comprising a breaker switch (72) series-connected within the corresponding electrical interconnection (20, 24) and a breaker module capacitor (74) connected in series with the auxiliary inductive element (66) to define an auxiliary resonant circuit (76) arranged in parallel with the breaker switch (72),

   the or each auxiliary inductive (66) element being mutually coupled with a main inductive element (44, 46, 48, 50), whereby in the event of a fault (84) resulting in a rising fault current (ii) flowing through one or more faulted DC current flow path portions (42A, 42B, 42C, 43A, 43B, 43C) and the main inductive element (44, 46, 48, 50) therewithin the rising fault current (ii) induces a rising voltage ($v_2$) across the corresponding mutually coupled auxiliary inductive element (66) which creates a growing counter current ($i_2$) in the or each corresponding auxiliary resonant circuit (76), and

the or each growing counter current ($i_2$) being opposed to the fault current (ii) flowing through the or each breaker switch (72) in the or each faulted DC current flow path portion (42A, 42B, 42C, 43A, 43B, 43C) and thereby permitting zero crossing opening of the or each said breaker switch (72) when the counter current ($i_2$) equals the fault current ($i_1$).

2. A power transmission scheme (10) according to Claim 1 wherein the at least one series-connected main inductive element (44, 46, 48, 50) is or includes one of a converter reactor (54, 56) located on an AC side (58) or a DC side (60) of the switching valve (34) within the first or second limb portion (28A, 28B, 28C, 30A, 30B), and a DC reactor (52, 62) located within the first or second electrical interconnection (20, 24).

3. A power transmission scheme (10) according to Claim 1 or Claim 2 wherein at least one DC current flow path portion (42A, 42B, 42C, 43A, 43B, 43C) includes a plurality of series-connected main inductive elements (44, 46, 48, 50), a plurality of which main inductive elements has an auxiliary inductive element (66) mutually coupled therewith, each of which auxiliary inductive element (66) is electrically connected with at least one breaker module (70; 70' 70"), the plurality of breaker modules (70; 70' 70") being connected in series to form a part of one circuit breaker arrangement (64).

4. A power transmission scheme (10) according to any preceding claim wherein at least one auxiliary inductive element (66) is electrically connected with a plurality of breaker modules (70; 70', 70"), the plurality of said breaker modules (70; 70', 70") being connected in series to form a part of one circuit breaker arrangement (64).

5. A power transmission scheme (10) according to any preceding claim wherein the at least one auxiliary inductive element (66) is or includes an auxiliary coil (68).

6. A power transmission scheme (10) according to any preceding claim wherein the or each auxiliary coil (68) is magnetically coupled with the corresponding main inductive element (44, 46, 48, 50).

7. A power transmission scheme (10) according to Claim 5 or Claim 6 wherein the or each auxiliary coil (68) is located above the corresponding main inductive element (44, 46, 48, 50).

8. A power transmission scheme according to any of Claims 5 to 7 wherein the or each auxiliary coil (68) is centralised relative to the corresponding main inductive element (44, 46, 48, 50).

9. A power transmission scheme (10) according to any preceding claim wherein at least one breaker module (70; 70', 70") further includes a surge arrestor (78) connected in parallel with the breaker switch (72).

10. A power transmission scheme (10) according to any preceding claim wherein at least one breaker module (70; 70', 70") further includes a discharge transformer (80) connected in parallel with the breaker module capacitor (74).

11. A power transmission scheme (10) according to any preceding claim wherein at least one circuit breaker arrangement (64) additionally includes a residual breaker switch (82) connected in series within the corresponding first or second electrical interconnection (20, 24).

**Figure 1**

**Figure 2**

**Figure 3**

**Figure 4**

Europäisches
Patentamt

European
Patent Office

Office européen
des brevets

# EUROPEAN SEARCH REPORT

Application Number

EP 20 27 5144

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KINJO RYOTA ET AL: "Resonant DC circuit breaker in MMC-HVDC transmission system", 2017 IEEE 12TH INTERNATIONAL CONFERENCE ON POWER ELECTRONICS AND DRIVE SYSTEMS (PEDS), IEEE, 12 December 2017 (2017-12-12), pages 71-74, XP033320289, DOI: 10.1109/PEDS.2017.8289169 [retrieved on 2018-02-09] * Chapters II.B and II.C; figures 1-4 * | 1-11 | INV. H02M1/32 H01H33/04 H01H33/59 H02M7/483 |
| Y | CN 105 186 443 A (UNIV HUAZHONG SCIENCE TECH) 23 December 2015 (2015-12-23) * figures 1-4 * | 1-11 | |
| A | EP 0 758 137 A1 (MITSUBISHI ELECTRIC CORP [JP]; KANSAI ELECTRIC POWER CO [JP] ET AL.) 12 February 1997 (1997-02-12) * figures 3, 4 * | 9 | |
| A | EP 3 413 330 A1 (MITSUBISHI ELECTRIC CORP [JP]) 12 December 2018 (2018-12-12) * figures 4, 5 * | 9 | TECHNICAL FIELDS SEARCHED (IPC) H02M H01H |

The present search report has been drawn up for all claims

| Place of search | Date of completion of the search | Examiner |
|---|---|---|
| The Hague | 2 March 2021 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 27 5144

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2021

| Patent document cited in search report | | Publication date | Patent family member(s) | | Publication date |
|---|---|---|---|---|---|
| CN 105186443 | A | 23-12-2015 | NONE | | |
| EP 0758137 | A1 | 12-02-1997 | CA | 2182821 A1 | 09-02-1997 |
| | | | EP | 0758137 A1 | 12-02-1997 |
| | | | JP | H0950743 A | 18-02-1997 |
| | | | US | 5737162 A | 07-04-1998 |
| EP 3413330 | A1 | 12-12-2018 | EP | 3413330 A1 | 12-12-2018 |
| | | | JP | 6042041 B1 | 14-12-2016 |
| | | | JP | WO2017134825 A1 | 08-02-2018 |
| | | | US | 2019027327 A1 | 24-01-2019 |
| | | | WO | 2017134825 A1 | 10-08-2017 |

EPO FORM P0459

For more details about this annex : see Official Journal of the European Patent Office, No. 12/82